Europäisches Patentamt

European Patent Office

Office européen des brevets

(11) Numéro de publication: **0 188 937 B1**

## FASCICULE DE BREVET EUROPEEN

(45) Date de publication de fascicule du brevet:
27.02.91

(51) Int. Cl.⁵: **G01S 1/56**

(21) Numéro de dépôt: **85402455.1**

(22) Date de dépôt: **10.12.85**

(54) Procédé de synchronisation radioélectrique de stations esclaves par une station maître, notamment pour un système d'aide à l'atterrissage de type MLS, et dispositifs de mise en oeuvre d'un tel procédé.

(30) Priorité: **14.12.84 FR 8419195**

(43) Date de publication de la demande:
**30.07.86 Bulletin 86/31**

(45) Mention de la délivrance du brevet:
**27.02.91 Bulletin 91/09**

(84) Etats contractants désignés:
**DE GB IT**

(56) Documents cités:
**EP-A- 0 082 770**
**US-A- 3 801 981**

(73) Titulaire: **THOMSON-CSF**
**51, Esplanade du Général de Gaulle**
**F-92800 Puteaux(FR)**

(72) Inventeur: **Hetyei, Joseph**
**THOMSON-CSF SCPI 19, Avenue de Messine**
**F-75008 Paris(FR)**
Inventeur: **Letoquart, Bruno**
**THOMSON-CSF SCPI 19, Avenue de Messine**
**F-75008 Paris(FR)**

(74) Mandataire: **Benoit, Monique et al**
**THOMSON-CSF SCPI**
**F-92045 PARIS LA DEFENSE CEDEX 67(FR)**

## Description

La présente invention concerne un procédé de synchronisation radioélectrique de stations esclaves par une station maître, procédé notamment applicable à la synchronisation des stations azimut et site d'un système d'aide à l'atterrissage du type MLS. L'invention a également pour objet des dispositifs de mise en oeuvre dudit procédé.

On rappelle qu'un système d'aide à l'atterrissage de type MLS - Microwave Landing System, selon l'expression anglo-saxonne - permet de fournir à un aéronef différentes informations - appelées "fonctions" -sur sa position, notamment l'angle d'azimut et l'angle de site, dans un repère lié à la piste d'atterrissage ainsi que, éventuellement, d'autres fonctions annexes telles que l'azimut arrière par exemple, et un certain nombre de données, les unes dites "de base" et les autres dites "auxiliaires". Ces différentes informations sont émises en alternance par le système MLS, à partir du sol en multiplexage temporel sur une même fréquence, voisine de 5 GHz, selon des caractéristiques normalisées par l'Organisation de l'Aviation Civile Internationale (OACI), annexe 10, paragraphe 3-onze.

Chacune de ces informations émises, sur l'azimut ou le site notamment, se décompose en deux parties, émises successivement :

- un préambule dont le rôle principal est de fournir à l'aéronef une identification de l'émission qui va suivre immédiatement. Ce préambule est émis par une antenne dite sectorielle, c'est-à-dire une antenne à diagramme rayonnant fixe couvrant l'ensemble de la zone, ou secteur, couverte par le système MLS. Le préambule se présente sous la forme d'un mot binaire émis en modulation de phase différentielle DPSK (pour Differential Phase Shift Keying en anglais), selon les normes OACI;
- l'information angulaire proprement dite, émise à l'aide d'une antenne à balayage électronique, selon le principe bien connu du faisceau battant à référence temporelle (Time Reference Scanning Beam, TRSB, en anglais).

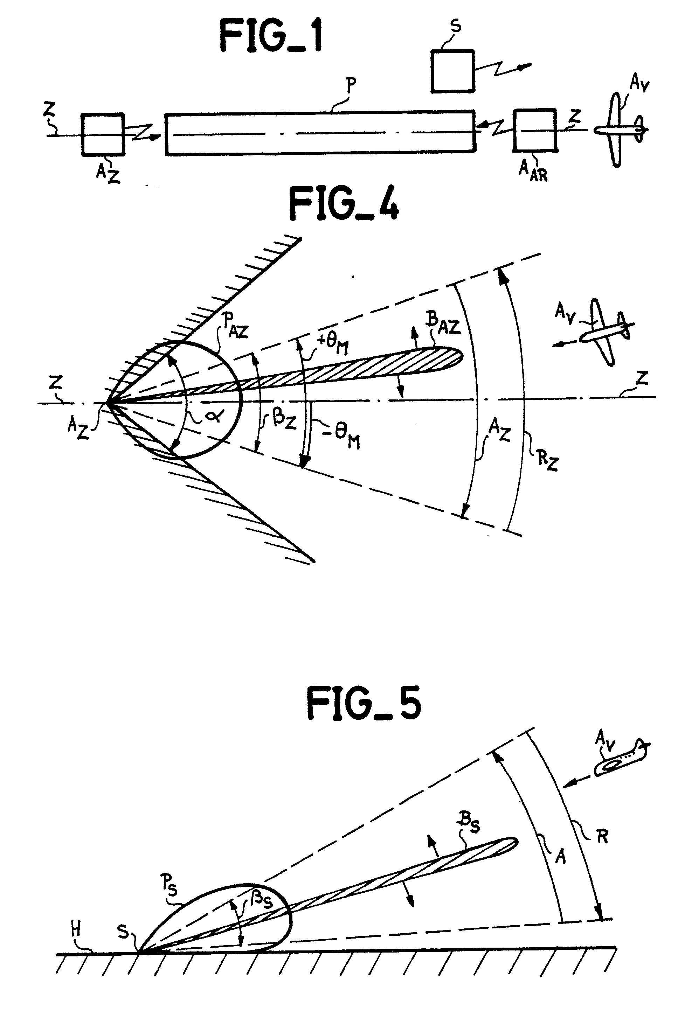

La figure 1 représente une disposition fréquente des stations azimut, site et azimut arrière autour d'une piste d'atterrissage.

Les stations azimut et site sont généralement placées l'une par rapport à l'autre à une distance de plusieurs kilomètres. La station azimut (Az) est proche de l'extrémité de la piste, repérée P et d'axe ZZ ; elle émet en direction de la piste P, permettant ainsi à l'aéronef (Av) de disposer de l'information angulaire d'azimut durant tout l'atterrissage, et cela même durant la phase de roulement sur la piste. La station site (S) émet dans la même direction mais elle est par contre proche du seuil de la piste, permettant à l'aéronef (Av) d'être guidé sur une trajectoire à angle de site constant durant l'atterrissage et d'être amené par cette trajectoire en entrée de piste. La station azimut arrière ($A_{AR}$) est placée en entrée de piste, de façon symétrique à la station azimut Az, et émet également en direction de la piste.

Le fonctionnement en temps partagé sur une même fréquence impose donc l'existence d'une liaison de synchronisation en temps entre les stations, pour assurer le non-recouvrement des émissions azimut, site et azimut arrière.

La figure 2 représente un exemple de réalisation d'une séquence temporelle OACI complète émise par un système MLS.

Elle se compose d'une succession de cycles identiques de durée égale à 615 ms au maximum. Chaque cycle lui-même se compose d'une succession de "séquences" et de mots de données auxiliaires.

La figure 3, a et b, représente respectivement deux exemples particuliers de constitution de ce qu'on appelle "séquence", de type 1 et 2.

Dans ces deux types, elle comporte une suite d'intervalles de temps réservés respectivement à l'azimut, au site, a l'azimut arrière et aux données de base.

Le rôle de la synchronisation est d'assurer que les différentes fonctions, azimut, site, azimut arrière, soient émises dans la tranche de temps qui leur est allouée. En général, la station azimut joue le rôle de station maître en engendrant le cycle MLS. Pour cela, elle doit envoyer des signaux de synchronisation vers les autres stations pour leur permettre d'émettre à l'instant voulu.

Cette synchronisation peut être réalisée par liaison physique, câble électrique, fibre optique par exemple. Mais elle présente alors l'inconvénient d'être onéreuse en raison des travaux de génie civil qu'elle entraîne, notamment la construction de tranchées sur des distances pouvant atteindre plusieurs kilomètres. C'est pourquoi, il apparaît plus intéressant de réaliser cette synchronisation radioélectriquement.

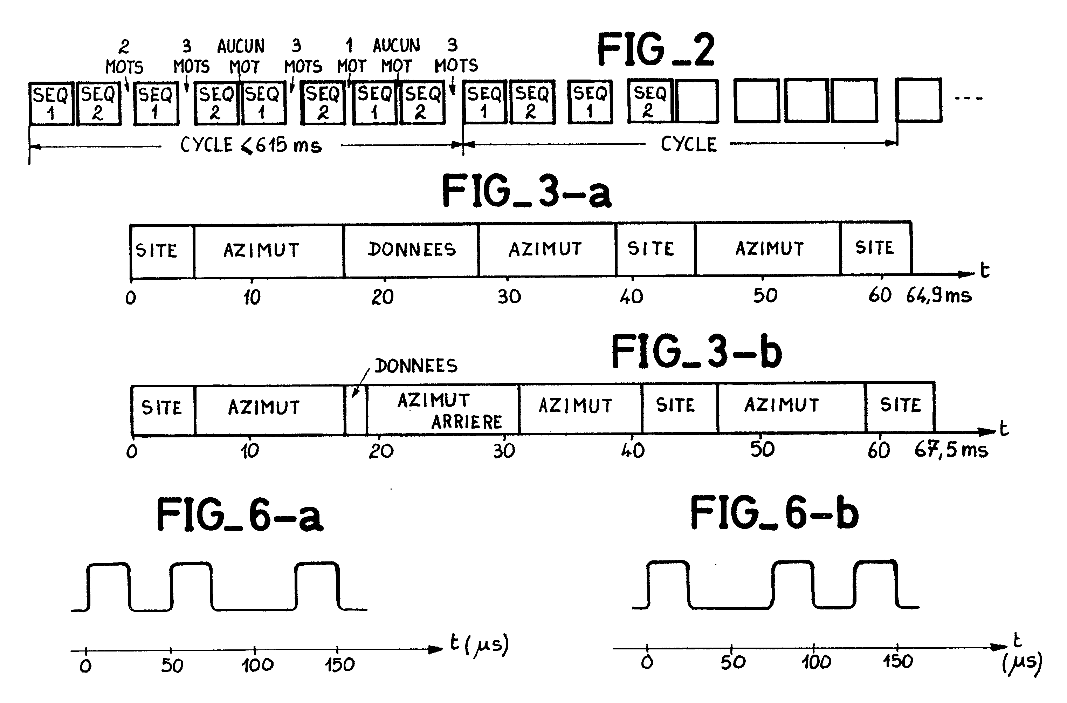

Une solution pour réaliser cette synchronisation radioélectrique utilise le balayage aller-retour du faisceau battant de la station azimut, dont le principe déjà mentionné est décrit plus en détail ci-dessous, en relation avec les figures 3 et 4 qui illustrent le principe des émissions respectivement azimut et site.

D'une station azimut, selon ce qui précède, sont émis deux rayonnements différents par deux antennes distinctes, que pour simplifier on a représenté en un même point $A_Z$ sur la figure 4. Partant du point $A_Z$, on a donc d'une part le diagramme d'émission du préambule, noté $P_{AZ}$, émis par une

antenne sectorielle dans toute la zone de couverture du système MLS, qui est représentée sur la figure par un angle $\alpha$. De ce point $A_z$ on a, d'autre part, le diagramme d'un faisceau $B_{AZ}$ plat et vertical, dit faisceau battant, émis par une antenne à balayage électronique ; le faisceau $B_{AZ}$ effectue à vitesse constante un balayage aller puis, après un temps d'arrêt, un balayage retour, et ce dans une zone de balayage faisant un angle $\beta_Z$ sur la figure 4, qui peut être égal ou inférieur à l'angle de couverture précédent. Sur la figure, on a représenté $\beta_Z$ inférieur à $\alpha$ ; on a figuré également respectivement par une flèche $A_z$ et une flèche $R_z$ les trajets de balayage aller et balayage autour du faisceau $B_{AZ}$ dans la zone de balayage $\beta_Z$. On a enfin figuré un avion $A_V$ non correctement aligné, à titre d'exemple, avec l'axe ZZ de la piste.

Selon les normes OACI, l'angle $\beta_Z$ est compris entre 20° minimum, se décomposant par rapport à l'axe de piste ZZ en deux demi-angles $-\theta_M = +\theta_M = 10°$, et 120° maximum avec $-\theta_M = +\theta_M = 60°$ ; le faisceau $B_{AZ}$ a une ouverture de 1 à 4° dans le plan de la figure et de 15° environ dans le plan vertical.

Sur la figure 5 on a représenté, de façon analogue à ce qui a été fait sur la figure 4, le principe de l'émission site.

Figure 5, on distingue donc la station site S d'où sont émis deux faisceaux par deux antennes distinctes : l'une sectorielle, émettant le préambule site $P_S$ dont on a représenté le diagramme sur la figure, et l'autre émettant un faisceau battant plat $B_S$, balayant la zone de balayage d'angle noté $\beta_S$, balayage réalisé comme pour le faisceau battant azimut $B_{AZ}$.

Dans ce premier type de solution, le balayage aller-retour du faisceau battant de la station azimut, qui passe obligatoirement sur la station site, est utilisé pour la synchronisation de cette dernière station. Ceci implique que la station site soit équipée en outre:

- d'une antenne de réception, fonctionnant à environ 5 GHz selon les normes OACI, dirigée vers la station azimut de façon à capter le faisceau battant de cette station lors de son passage ;
- de moyens récepteurs, fonctionnant à environ 5 GHz, détectant les impulsions envoyées par le faisceau battant de la station azimut;
- des moyens logiques pour retrouver les séquences des émissions;
- d'une horloge ayant une grande précision et une grande stabilité pour assurer l'autonomie du fonctionnement de la station site, même en présence d'une interruption momentanée de la réception du signal émis par la station azimut ;
- des moyens logiques pour effectuer l'émission des séquences propres à la station site en cas de perte momentanée des informations de synchronisation.

Un premier type d'inconvénients de cette solution tient à la forme arrondie et à la grande largeur des impulsions obtenues par le passage aller-retour du faisceau battant $B_{AZ}$ sur la station site (50 à 200 $\mu$s), dont les fronts trop lents ne permettent pas d'obtenir une bonne précision sur le temps d'arrivée de l'impulsion, précision que l'on souhaite de l'ordre de quelques $\mu$s.

Un second type d'inconvénients provient de la grande complexité des moyens logiques pour retrouver les séquences d'émission, compte tenu du fait que les séquences azimut et site se suivent d'une manière non régulière dans un cycle MLS obligeant la station esclave (site) à les distinguer les unes des autres.

Une seconde solution au problème de la synchronisation radioélectrique de la station site par la station azimut consiste à utiliser le préambule émis par cette dernière. Dans ce cas, la station site doit comporter les mêmes moyens supplémentaires que dans le premier type de solution, à ceci près que les moyens récepteurs doivent maintenant décoder des émissions modulées en phase DPSK.

Là encore, une telle solution présente des inconvénients dont la nécessité d'un récepteur MLS très sensible, du fait que l'émission du préambule par l'antenne sectorielle se fait à un niveau plus faible que l'émission par l'antenne à balayage, et la complexité du récepteur qui doit être capable de décoder la modulation de phase DPSK.

Le document EP-A-O 082 770 décrit un système MLS dans lequel les préambules sont émis par une seule station, constituant la station maître, les autres stations étant synchronisées sur la première à l'aide d'un top de synchronisation transmis par câble ou radioélectriquement.

Le but de la présente invention est de pallier ces divers inconvénients.

L'invention a pour objet un procédé de synchronisation radioélectrique tel que défini par la revendication 1.

L'invention a également pour objet des moyens de mise en oeuvre de ce procédé, à l'émission et à la réception, tels que définis par les revendications 10 et 11.

D'autres d'objet, particularités et résultats de l'invention apparaîtront dans la description qui suit, donnée à titre d'exemple non limitatif et illustrée par les figures suivantes qui, outre les figures 1 à 5 déjà décrites, représentent:

- la figure 6 a et b : un exemple de signal de synchronisation utilisé dans le procédé suivant l'invention;

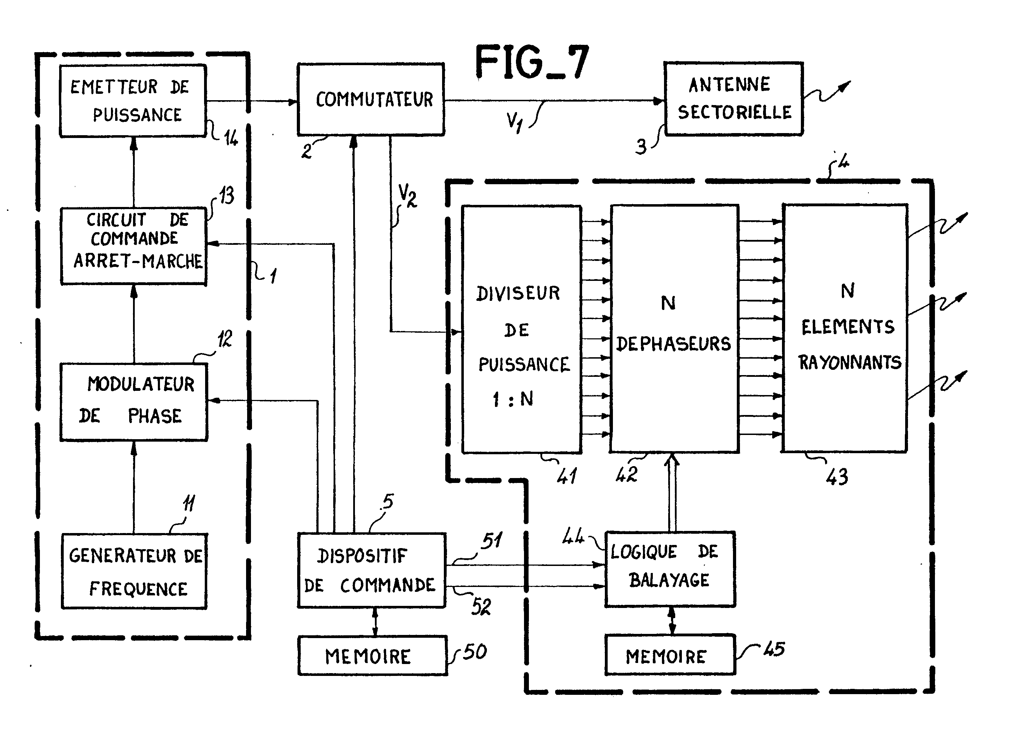

- la figure 7 : un mode de réalisation du dispositif de mise en oeuvre de l'invention à l'émission dans le cas d'un système MLS;

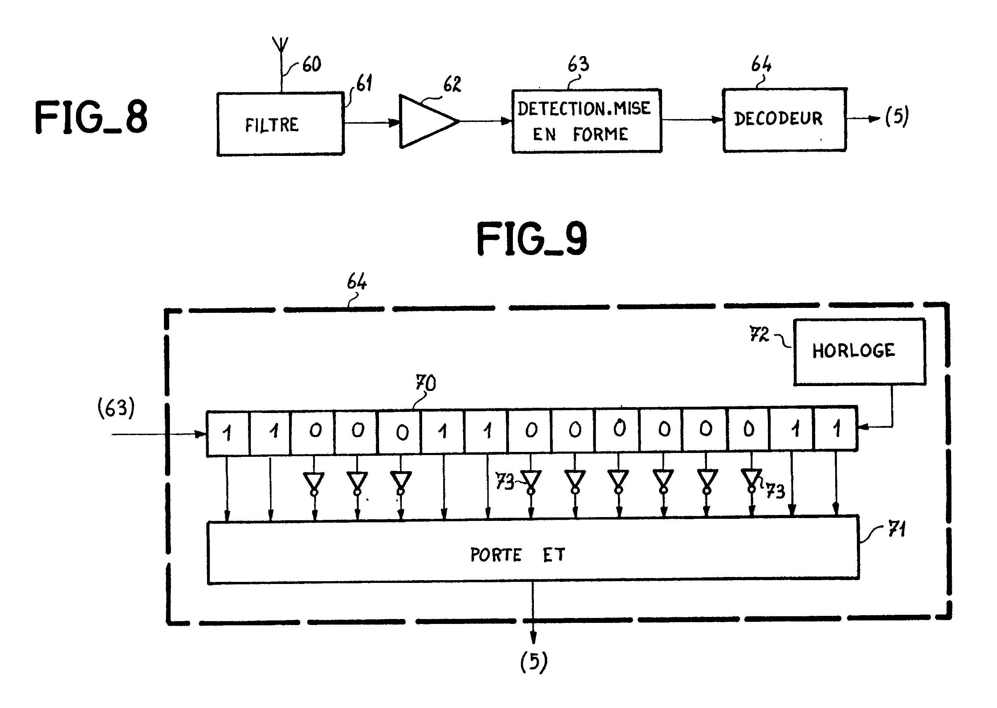

- les figures 8 et 9 : un mode de réalisation du dispositif de mise en oeuvre de l'invention à la réception dans le cas d'un système MLS;

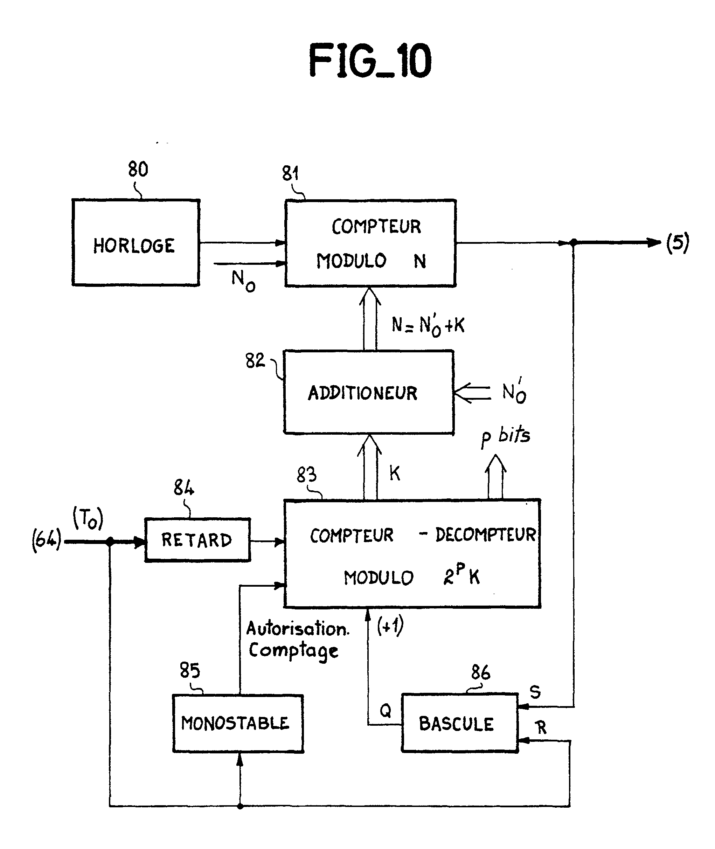

- la figure 10 : un perfectionnement de l'invention.

Les éléments ayant même fonction en vue d'un même résultat portent la même référence dans les différentes figures.

Selon le procédé objet de l'invention, dans un système MLS, la synchronisation d'au moins une station esclave par une station maître est réalisée par une étape supplémentaire d'émission d'une information de synchronisation, codée sous forme d'impulsions, de courte durée se différenciant nettement de toutes les autres informations émises par ces stations en fonctionnement normal.

Le rôle de maître peut être joué par l'une quelconque des stations du système MLS (azimut, site, azimut arrière, données ...). Toutefois, pour des raisons de couverture à l'émission, ce rôle est confié préférentiellement à la station azimut. Les autres stations du système MLS sont alors des stations esclaves.

D'autre part, deux modes de réalisation sont décrits ci-dessous, quant au moment de l'émission de cette information de synchronisation par rapport à l'émission normale des fonctions MLS par les différentes stations. Dans le premier mode, l'informations de synchronisation est émise en début de chaque cycle MLS et dans le deuxième mode, elle l'est en début de chaque fonction, pour chaque station esclave à synchroniser.

Enfin, l'information de synchronisation est émise soit par l'antenne sectorielle, soit par l'antenne à balayage électronique. Lorsque l'émission a lieu par l'antenne sectorielle, le diagramme de rayonnement couvre aussi bien la station site que la station azimut arrière. Cependant, le rayonnement de ces impulsions de synchronisation sera préférentiellement émis par l'antenne à balayage électronique, qui présente l'avantage d'un grand gain et d'une bonne directivité.

Selon le premier mode de réalisation mentionné ci-dessus, l'information de synchronisation est émise au début de chaque cycle MLS, sur la même fréquence, voisine de 5 GHz.Dans ce cas, pour réaliser la synchronisation des stations site et azimut arrière, par exemple, à partir de la station azimut, l'antenne à balayage électronique doit être pointée vers chacune d'elles successivement tous les deux cycles MLS, en début de chacun d'eux. Une telle périodicité suffit dans la mesure où chacune de ces stations esclaves comporte des moyens de mémorisation du déroulement des séquences à l'intérieur d'un cycle MLS et des moyens de sauvegarde ou d'autonomie de ces informations pendant un temps équivalent à plusieurs centaines de cycles MLS. Plus généralement, dans le cas de la synchronisation de N stations esclaves par une station maître, l'antenne à balayage est pointée vers chacune d'elles tous les N débuts de cycle MLS.

Selon le deuxième mode de réalisation où la synchronisation est faite en début de chaque fonction pour chacune des stations esclaves à synchroniser, l'information de synchronisation est émise de la même façon que précédemment soit par l'antenne sectorielle, soit par l'antenne à balayage électronique, qui est alors pointée vers chacune des stations à synchroniser en début de chaque fonction et émet une information de synchronisation. Toutefois, la directivité du faisceau n'étant en général pas suffisante pour adresser sélectivement chacune des stations esclaves, il est préférable que l'information de synchronisation soit alors codée différemment selon les stations esclaves. Le nombre de codes nécessaire est égal au nombre N de stations esclaves à synchroniser par la station maître.

Ainsi, selon le procédé objet de l'invention, la station azimut d'un système MLS émet, à partir de l'une des antennes dont elle dispose obligatoirement pour remplir sa fonction, une information de synchronisation codée sous forme d'au moins deux impulsions, le codage devant être différent de celui des informations MLS transmises par le système MLS dans son fonctionnement normal.

Deux exemples de signal de synchronisation sont représentés sur les figures 6 a et b. Le signal de synchronisation utilise des triplets d'impulsions à la fréquence MLS, environ 5 GHz, modulées en amplitude par tout ou rien. Les impulsions, identiques, ont une largeur $\ell$ = 20 $\mu$s de manière à les distinguer nettement des impulsions du faisceau battant (50 à 200 $\mu$s). Le codage est donné par l'espacement de ces trois impulsions. Deux exemples de codages sont donnés respectivement par les figures 6a et 6b. La référence de temps de synchronisation est par exemple le front montant de la première impulsion.

On peut utiliser les signaux de synchronisation de manières diverses:
- on utilise uniquement le signal de la figure 6a, émis en début du cycle MLS de 615 ms. La station esclave (site ou azimut arrière) doit alors contenir un séquenceur qui déroule l'ensemble du cycle MLS, de manière à connaître les périodes de temps qui lui sont allouées;
- le signal de la figure 6a sert à la synchronisation azimut-site et le signal de la figure 6b à la synchronisation azimut-azimut arrière. Le signal de synchronisation approprié (figures 6a ou 6b) est émis en début de chaque fonctions à synchroniser (site, azimut arrière) et provoque l'émission d'une seule fonction. Ce système occupe plus de temps que le précédent pour la synchronisation; il nécessite également un séquenceurs qui déroule le cycle MLS, et un système logique permettant en cas de perte momentané du signal de synchronisation.

- toute solution intermédiaire entre les deux précédentes est utilisable, par exemple en émettant le signal de la figure 6a en début de la séquence 1 et le signal de la figure 6b en début de la séquence 2 (voir figures 2 et 3).

Par ailleurs, la forme des impulsions doit être choisie pour avoir d'une part un temps de montée court (quelques micro-secondes) pour assurer une bonne précision de synchronisation et d'autre part une forme arrondie pour assurer un spectre rapidement décroissant autour de la fréquence porteuse.

Les impulsions de synchronisation émises par l'antenne de la station azimut, qui sont de courte durée et sans préambule - contrairement aux autres informations émises par la station - ne sont pas décodables par les récepteurs MLS, situés à bord des aéronefs, qui ainsi ne sont pas perturbés par ces informations (inutiles pour eux). De plus, ces impulsions arrivent hors période d'émission des informations MLS, de sorte qu'elles ne gênent pas. Enfin, dans la mesure où chaque série d'impulsions courtes n'est émise au maximum qu'une fois par émission d'une fonction esclave, elles n'ont pas d'effet gênant sur le spectre.

La station azimut d'une part et les stations site et azimut arrière par exemple d'autre part, doivent être dotées de moyens particuliers pour pouvoir émettre et recevoir. Ces moyens sont décrits ci-après.

La figure 7 représente un mode de réalisation du dispositif de mise en oeuvre de l'invention à l'émission, dans le cas d'une station MLS.

Ce dispositif comporte essentiellement un émetteur 1, deux antennes : une antenne sectorielle 3 et une antenne à balayage électronique 4, et différents circuits de commande (2,5).

L'émetteur 1 comporte, en cascade ;

- un générateur de fréquence 11, constitué par exemple par un synthétiseur de fréquence fournissant une onde voisine de 5 GHz selon la norme OACI (on rappelle que, selon cette norme, une fréquence parmi 200 fréquences prédéfinies, voisines de 5 GHz, est affectée à chaque station MLS);
- un modulateur de phase 12, réalisant une modulation de phase DPSK à deux états $(0,\pi)$, permettant d'émettre le préambule et les données sur commande d'un dispositif logique de commande 5, tel qu'un microprocesseur ;

- un circuit 13 de commande marche/arrêt, également commandé par le microprocesseur 5 ;
- un émetteur de puissance 14, réalisé à l'aide de tubes ou de transistors selon la puissance requise, qui est classiquement de l'ordre de 20W et donc le plus souvent réalisé à l'aide de transistors.

L'émetteur 1 fournit un signal, par l'intermédiaire d'un commutateur 2, soit sur une voie $V_1$ à l'antenne sectorielle 3 pour l'émission du préambule et des données, de base ou auxiliaires, soit sur une voie $V_2$ à l'antenne à balayage 4.

L'antenne à balayage électronique 4 se décompose en un diviseur (ou répartiteur) de puissance 41, divisant la puissance reçue du commutateur 2 en N afin d'alimenter N déphaseurs numériques (bloc 42), lesquels alimentent N éléments rayonnants (bloc 43) ; les valeurs des déphasages introduits par les déphaseurs 42 sont commandées par un circuit logique de balayage 44, afin de réaliser un balayage électronique à partir d'éléments rayonnants statiques, ainsi qu'il est connu. On rappelle que, si on désire émettre un faisceau (de longueur d'onde $\lambda$) faisant un angle $\theta$ avec la normale à l'alignement des éléments rayonnants 43, le déphasage $\Delta\phi_{\theta,i}$ introduit par un déphaseur de rang i $(1<i\leqslant N)$ est donné par :

$$\Delta\phi_{\theta,i} = 2\,\pi\,i.\,d\,\overline{\lambda}.\sin\theta$$

où d est la distance entre deux éléments rayonnants successifs. Le circuit logique de balayage 44 est en général un circuit câblé, distinct du microprocesseur 5 (mais cela n'est pas impératif) à cause de la rapidité nécessaire ; ce circuit 44, sur ordre de départ du microprocesseur 5, effectue la commande des déphaseurs 42 de manière à assurer le balayage désiré par pointages successifs rapides du lobe de l'antenne ; les positions des déphaseurs 42 pour chaque pointage sont en général mises en mémoire (mémoire 45) dans des mémoires du type PROM. Le nombre N des déphaseurs 42 est couramment de l'ordre de 20 à 100.

L'ensemble du dispositif est donc commandé par le microprocesseur 5 et sa mémoire 50 ( du type PROM par exemple), connecté à l'émetteur 1, au commutateur 2 et à l'antenne à balayage 4, par l'intermédiaire du circuit logique de balayage 44 ; le microprocesseur 5 fournit au circuit logique de balayage d'une part l'instant de départ du balayage pour les fonctions site ou azimut (flèche 51) et d'autre part, dans le cas de la station azimut, l'ordre de pointage du faisceau battant vers la station site lors de l'émission du signal de synchronisation (flèche 52). Le cycle MLS, tel que représenté par exemple figures 2 et 3, est contenu dans la mémoire 50 du microprocesseur 5.

Plus précisément, selon un mode de réalisation, on définit dans le microprocesseur 5 un "mot d'état" de la station, chaque bit de ce mot représentant une commande. Dans l'exemple ci-dessus, ce mot comporte au moins six bits, commandant respectivement :

- le modulateur 12;
- la commande 13 ;
- le commutateur 2 ;
- la logique de balayage 44 (2 bits) ;
- la synchronisation site ($S_s$) dans le cas de la station azimut.

La génération en temps réel d'une séquence, telle que celle des figures 4b ou 5b, revient à engendrer en temps réel ce mot d'état, qui réalise ensuite les différentes commandes. A cet effet, on range dans une table de la mémoire 50 la succession des mots d'état correspondant à la séquence désirée. Au rythme d'une horloge convenable (ici 64 $\mu$s), le microprocesseur 5 va chercher les mots d'état successifs et les fournit à une interface (non représentée), du type PIA (pour "Parallel Interface Adapter"en Anglais) par exemple, qui commande les divers blocs. Il est à noter que, du fait de la répétition de certaines des fonctions dans une même séquence, il est possible de diminuer l'espace mémoire nécessaire en le hiérarchisant : on mémorise alors autant de tables que de fonctions, une table principale définissant la séquence par appel des fonctions successives.

Un système MLS comporte, au sol, en général trois stations telles que celle de la figure 7, comme illustré sur la figure 1 : une pour la fonction azimut, une pour la fonction site et une pour la fonction azimut arrière.

Selon l'invention, celle des stations qui est choisie comme station maître (station azimut par exemple) voit alors le contenu de sa mémoire 50 modifié afin d'assurer l'émission supplémentaire des impulsions de synchronisation.

La figure 8 représente un mode de réalisation des moyens supplémentaires nécessaires à la mise en oeuvre de l'invention à la réception dans une station esclave.

Ce dispositif comporte, en cascade :

- une antenne 60, susceptible de recevoir le rayonnement de la station maître à une fréquence d'environ 5 GHz ;
- un filtre passe-bande 61, centré sur la fréquence précédente et suivi d'un amplificateur 62, de même fréquence de fonctionnement ;
- un dispositif 63 de détection du signal de synchronisation et de mise en forme de ce signal, réalisé à l'aide de diodes par exemple ;
- un dispositif 64 de décodage de l'information de synchronisation, qui envoie un signal donnant l'instant de référence de synchronisation au dispositif de commande 5 de la station esclave considérée.

Dans une variante de réalisation, l'ensemble filtre 61 et amplificateur 62 peut être remplacé par un récepteur MLS conventionnel (superhétérodyne 200 canaux).

La figure 9 représente un mode de réalisation du décodeur 64 de la figure 8, dans le cas où l'information de synchronisation se présente sous la forme de trois impulsions telles que celles de la figure 6a.

Ce décodeur comporte un registre à décalage 70, commandé par une horloge 72 de fréquence égale à 100 kHz, comportant 15 positions ce qui lui permet de décoder un signal, reçu du détecteur 63, de 0,15 ms.

Chacune des positions du registre 70 est reliée à une porte logique ET 71, par l'intermédiaire le cas échéant d'un inverseur 73, la programmation du message à décoder se faisant par le positionnement des inverseurs 73. La porte ET 71 réalise alors la corrélation entre le message attendu et le message reçu : sa sortie n'est à 1 qu'à réception du bon message. Cette sortie fournit l'instant référence de synchronisation au dispositif de commande 5.

La figure 10 représente un perfectionnement apporté au fonctionnement des stations esclaves dans le cas où il se produit une interruption accidentelle et momentanée de la liaison radio-électrique entre les stations maître et esclaves. Une telle interruption peut être due simplement à la présence d'un obstacle mobile (passage d'un avion gros porteur par exemple).

Le dispositif de la figure 10 est un système horloge (horloge 80 et compteur 81) asservi en fréquence sur le signal de synchronisation reçu du décodeur 64 et conçu de sorte qu'il continue à délivrer un signal vers le circuit de commande 5 même en l'absence de signal reçu du décodeur 64.

A cet effet, ce dispositif comporte :

- une horloge 80, à bonne stabilité dans le temps et à fréquence élevée pour avoir une bonne précision dans l'asservissement ; un oscillateur à quarts asservi en temps, donnant une précision de l'ordre de $10^{-6}$ peut convenir ;
- un compteur 81, modulo N, de manière à engendrer un signal de période $T_0$ = 615 ms qui est la durée d'un cycle MLS. Si on utilise une horloge de période $\tau$ = 0,1 $\mu$s on obtient un nombre $N_0$ de comptage tel que $N_0$ = O, 615 x $10^7$.

Afin de tenir compte d'une éventuelle dérive de l'horloge 80 dans le temps, due par exemple à des variations de température, on choisit un nombre N différent de $N_0$, le changement d'une unité du nombre N correspondant alors à une variation de fréquence de $+ 1, 63. 10^{-7}$.

Pour cela, on utilise :
- une bascule 86 du type RS, servant de discriminateur de phase et dont l'état de sortie est représentatif de l'avance de phase de l'un des signaux qu'elle reçoit par rapport à l'autre, c'est-à-dire le signal d'entrée (issu du dispositif 64) et le signal de sortie (issu du compteur 81);
- un compteur-décompteur 83, modulo $2^p K$ ; la sortie comporte p bits de poids faible, qui ne sont pas pris en compte, et des bits de poids fort qui représentent un nombre K. Ce compteur-décompteur 83 voit son contenu varier de $+ 1$ à chaque période $T_0$ en fonction de la phase relative de l'entrée (64) par rapport à la sortie (81). Toutefois, il faut avoir successivement $2^p$ fois la valeur $+ 1$ pour faire varier K de $+ 1$ : ceci correspond à un effet de filtrage passe-bas dans la boucle ;
- un additionneur 82 effectuant la somme $N = N'_0 + K$, avec $N'_0$ valeur fixe correspondant à la plus faible valeur de N à considérer, correspondant à la fréquence horloge extrême à compenser, c'est-à-dire que

$$N_0 = N'_0 + \frac{K_0}{2} \quad , K_0$$

étant le contenu maximum du compteur-décompteur 83.

Le circuit tel que décrit ci-dessus réalise ainsi un asservissement de phase (et donc de fréquence) de la sortie (vers le circuit 5) sur l'entrée (venant du circuit 64). Un monostable 85, connecté entre l'entrée et le compteur-décompteur 83, envoie une autorisation de comptage-décomptage à l'élément 83 pendant une durée égale à sa période. Cette période ($T_M$) étant choisie telle que $T_0 < T_M < 2 T_0$, il apparaît que si un signal est reçu à l'entrée en permanence, l'asservissement fonctionne mais que, si rien n'est reçu, l'asservissement est interrompu après la première impulsion manquante. Le circuit garde alors en mémoire la dernière valeur de N et continue à fournir un signal, de période $T_0$, au dispositif 5.

Enfin, le circuit de la figure 10 comporte une commande d'initialisation du compteur 81 à la valeur $N = N_0$, et un élément de retard 84, connecté entre l'entrée du circuit et l'entrée du compteur-décompteur 83, destiné à compenser les retards subis par le signal d'entrée dans la bascule 86.

**Revendications**

1. Procédé de synchronisation radioélectrique d'au moins une station esclave par une station maître dans un système d'aide à l'atterrissage de type MLS ce système comportant une pluralité d'étapes successives d'émission de fonctions MLS respectivement par les différentes stations, celles-ci comportant à cet effet des moyens d'émission de fonctions MLS, ces fonctions constituant un cycle, le procédé comportant une étape supplémentaire d'émission radioélectrique par la station maître d'une information de synchronisation, émise périodiquement sur la fréquence d'émission des fonctions MLS, le procédé étant caractérisé par le fait que l'information de synchronisation est codée sous la forme d'une pluralité d'impulsions successives émise au moins une fois par cycle, la durée et/ou l'espacement des impulsions les différenciant des autres informations émises par les stations, et que l'étape supplémentaire d'émission est effectuée par les moyens d'émission de fonctions MLS de la station maître.

2. Procédé selon la revendication 1, caractérisé par le fait que les impulsions de synchronisation sont émises en début de chaque cycle MLS.

3. Procédé selon la revendication 1, caractérisé par le fait que les impulsions formant l'information de synchronisation sont émises, pour chaque cycle MLS, en début de chaque fonction, à destination de la station esclave émettant cette fonction.

4. Procédé selon l'une des revendications précédentes, caractérisé par le fait que la station maître est la station azimut du système MLS.

5. Procédé de synchronisation selon l'une des revendications précédentes, par une station maître comportant une antenne sectorielle et une antenne à balayage électronique, caractérisé par le fait que les impulsions de synchronisation sont émises par l'antenne sectorielle.

6. Procédé de synchronisation selon l'une des revendications 1 à 5, de N stations esclaves par une station maître, comportant une antenne sectorielle et une antenne à balayage électronique, caractérisé par le fait que les impulsions de synchronisation sont émises par l'antenne à balayage électronique pointée successivement vers chacune des stations esclaves.

7. Procédé selon l'une des revendications précédentes, caractérisé par le fait que le code de l'information de synchronisation est réalisé par l'espacement entre les impulsions.

8. Procédé selon l'une quelconque des revendications précédentes, caractérisé par le fait que l'information de synchronisation est codée sous la forme d'une série de trois impulsions.

9. Dispositif de mise en oeuvre à l'émission du procédé selon l'une des revendications précédentes, dans une station maître,comportant :
   - une antenne sectorielle (3) ;
   - une antenne à balayage électronique (4) ;
   - des moyens émetteurs (1) fournissant les informations à émettre aux antennes précédentes ;
   - des moyens de commutation (2) entre les moyens émetteurs (1) d'une part et les deux antennes (3,4) d'autre part ;
   - des moyens de commande (5), assurant le séquencement des émissions de la station ;
   le dispositif étant caractérisé par le fait que les moyens de commande (5) sont agencés pour assurer en outre la commande de l'émission, par l'une des deux antennes, d'une information de synchronisation, codée sous la forme d'une pluralité d'impulsions successives, émise au moins une fois par cycle, la durée et/ou l'espacement des impulsions les différenciant des autres informations émises par les stations.

10. Dispositif de mise en oeuvre à la réception du procédé selon l'une des revendications 1 à 8, dans une station esclave, qui comporte des moyens de commande (5) assurant le séquencement des émissions de la station ; le dispositif étant caractérisé par le fait qu'il comporte en outre :
   - une antenne (60) de réception de l'information de synchronisation ;
   - des moyens de réception et de détection (61, 62, 63) de l'information de synchronisation ;
   - des moyens de décodage (64) du signal issu des moyens précédents, agencés pour fournir, en cas de reconnaissance de l'information de synchronisation, un signal donnant l'instant de référence de synchronisation, dit signal de synchronisation, aux moyens de commande (5) de la station.

11. Dispositif selon la revendication 10, caractérisé par le fait que les moyens de réception et de détection comportent un filtre (61) et un circuit de détection et mise en forme (63) de l'information filtrée.

12. Dispositif selon l'une des revendications 10 ou 11, caractérisé par le fait que les moyens de décodage (64) comportent un registre à décalage (70) relié à une porte ET par l'intermédiaire d'inverseurs (73), disposés à certaines sorties des différentes positions du registre selon la configuration des impulsions de synchronisation à décoder.

13. Dispositif selon l'une des revendications 10 à 12, caractérisé par le fait qu'il comporte de plus des moyens assurant la génération du signal de synchronisation en l'absence de réception de l'information de synchronisation émise par la station maître, ces moyens étant placés entre les moyens de décodage (64) et les moyens de commande (5) de la station, et comportant un système horloge (80, 81) asservi en fréquence sur l'information de synchronisation lorsqu'elle existe, délivrant le signal de synchronisation aux moyens de commande (S) de la station.

## Claims

1. A method for the radio synchronization of at least one slave station by a master station in a landing guidance system of the MLS type, said system comprising a plurality of successive stages of MLS function transmission performed respectively by the different stations, the latter for this purpose comprising MLS, function transmitting means, these functions constituting a cycle, said method comprising a supplementary stage of radio transmission by the master station of an item of synchronization information, transmitted periodically at the transmission frequency of the MLS functions, said method being characterized in that the synchronization information is encoded in the form of a plurality of successive pulses transmitted at least once every cycle, the duration and/or the spacing of the pulses distinguishing them from other information transmitted by the stations, and in that the supplementary transmission stage is performed by MLS function transmission means of the master station.

2. The method as claimed in claim 1, characterized in that the synchronization pulses are transmitted at the start of every MLS cycle.

3. The method as claimed in claim 1, characterized in that the pulses constituting the synchronization information are transmitted, for each MLS cycle, at the start of every function, with the slave station transmitting said function as the desitination.

4. The method as claimed in any one of the preceding claims, characterized in that the master station is the azimuth station of the MLS system.

5. The synchronization method as claimed in any one of the preceding claims, by a master station having a sector antenna and an electronic sweep antenna, characterized in that the synchronization pulses are transmitted by the sector antenna.

6. The synchronization method as claimed in any one of the preceding claims 1 through 5, with N slave stations and a master station, comprising a sector antenna and one electronic sweep antenna, characterized in that the synchronization pulses are transmitted by the electronic sweep antenna while directed successively at each one of the slave stations.

7. The method as claimed in any one of the preceding claims, characterized in that the encoding of the synchronization information is expressed by the space between the pulses.

8. The method as claimed in any one of the preceding claims, characterized in that the synchronization information is encoded in the form of a series of three pulses.

9. A device for performing the transmission in accordance with the method as claimed in any one of the preceding claims in a master station, comprising:
   - a sector antenna (3);
   - an electronic sweep antenna (4);
   - transmitter means (1) providing information to be transmitted to the preceding antennas;
   - switching means (2) between the transmitting means (1) on the one hand and the two antennas (3 and 4) on the other, and;
   - control means (5) ensuring the sequencing of the transmissions from the station;
the device being characterized in that the control means (5) are operated in order to furthermore ensure control of transmission, by one of the antennas, of an item of synchronization information, encoded in the form of a plurality of successive pulses, transmitted at least once for each cycle, the duration and/or the spacing of the pulses distinguishing them from other information transmitted by the stations.

10. A device for performing reception in accordance with the method as claimed in any one of the preceding claims 1 through 8, in a slave station comprising control means (5) ensuring the sequencing of the transmission of the station, said device being characterized in that it furthermore comprises:
   - an antenna (60) for the reception of synchronization information;
   - means for the reception and detection (61, 62 and 63) of the synchronization information;
   - decoding means (64) for the signal from the preceding means and operated in order to supply, in the case of synchronization information being recognized, a signal indicating the synchronization reference instant, termed the synchronization signal, to the control means (5) of the stations

11. The device as claimed in claim 10, characterized in that the means for receiving and for detecting comprise a filter (61) and detecting and forming circuit (63) for the filtered information.

12. The device as claimed in claim 10 or in claim 11, characterized in that the decoding means (64) comprise a shift register (70) connected to an AND gate through the intermediary of inverters (73) placed at certain outputs of different positions of the register in accordance with the configuration of the synchronization pulses to be decoded.

13. The device as claimed in any one of the claims 10 through 12, characterized in that it furthermore comprises means ensuring the generation of the synchronization signal in the absence of reception of synchronization information transmitted by the master station, said means being placed between the decoding means (64) and the control means (5) of the station, and comprising a clock system (80 and 81) controlled as regards frequency to follow the synchronization information if it is in existence, supplying the synchronization signal to the oontrol means (S) of the station.

**Ansprüche**

1. Verfahren zur radioelektrischen Synchronisation wenigstens einer Nebenstation mit einer Leitstation in einem Landehilfesystem vom MLS-Typ, wobei dieses System eine Mehrzahl von aufeinanderfolgenden Schritten des Aussendens von MLS-Funktionen durch die verschiedenen Stationen enthält, wobei diese Stationen zu diesem Zweck Mittel zum Aussenden der einen Zyklus bildenden MLS-Funktionen enthalten, wobei das Verfahren einen zusätzlichen Schritt zum radioelektrischen Aussenden einer periodisch mit der Sendefrequenz der MLS-Funktionen ausgesandten Synchronisationsinformation durch die Leitstation enthält, wobei das Verfahren dadurch gekennzeichnet ist, daß die Synchronisationsinformation in Form einer Mehrzahl von aufeinanderfolgenden Impulsen, die wenigstens einmal pro Zyklus ausgesandt werden, kodiert wird, wobei die Dauer und/oder der Abstand der Impulse diese von den anderen von den Stationen ausgesandten Informationen unterscheidet, und daß der zusätzliche Schritt des Aussendens von den Mitteln zum Aussenden von MLS-Funktionen der Leitstation ausgeführt wird.

2. Verfahren gemäß Anspruch 1, dadurch gekennzeichnet, daß die Synchronisationsimpulse am Anfang eines jeden MLS-Zyklus ausgesandt werden.

3. Verfahren gemäß Anspruch 1, dadurch gekennzeichnet, daß die die Synchronisationsinformation bildenden Impulse für jeden MLS-Zyklus am Anfang einer jeden Funktion zu der diese Funktion aussendenden Nebenstation ausgesandt werden.

4. Verfahren gemäß einem der vorangehenden Ansprüche, dadurch gekennzeichnet, daß die Leitstation die Azimutstation des MLS-Systems ist.

5. Verfahren zur Synchronisation gemäß einem der vorangehenden Ansprüche mittels einer eine Sektorantenne und eine elektronisch verschwenkbare Antenne enthaltenden Leitstation, dadurch gekennzeichnet, daß die Synchronisationsimpulse von der Sektorantenne ausgesandt werden.

6. Verfahren zur Synchronisation gemäß einem der Ansprüche 1 bis 5 von N Nebenstationen mittels einer eine Sektorantenne und eine elektronisch verschwenkbare Antenne enthaltenden Leitstation, dadurch gekennzeichnet, daß die Synchronisationsimpulse von der elektronisch verschwenkbaren Antenne ausgesandt werden, die nacheinander auf jede der Nebenstationen gerichtet wird.

7. Verfahren gemäß einem der vorangehenden Ansprüche, dadurch gekennzeichnet, daß der Kode der Synchronisationsinformation durch den Abstand zwischen den Impulsen verwirklicht wird.

8. Verfahren gemäß einem der vorangehenden Ansprüche, dadurch gekennzeichnet, daß die Synchronisationsinformation in Form einer Reihe von drei Impulsen kodiert wird.

9. Vorrichtung zum Ausführen des Verfahrens gemäß einem der vorangehenden Ansprüche beim Aussenden, in einer Leitstation, mit:
   - einer Sektorantenne (3);
   - einer elektronisch verschwenkbaren Antenne (4);
   - Sendemitteln (1), die die auszusendenden Informationen an die vorhergehenden Antennen liefern;
   - Schaltmitteln (2) zwischen den Sendemitteln (1) einerseits und den zwei Antennen (3, 4) andererseits;
   - Steuermitteln (5), die die Sendefolge der Station gewährleisten; wobei die Vorrichtung dadurch gekennzeichnet ist, daß die Steuermittel (5) so angeordnet sind, daß sie außerdem die Steuerung des Aussendens mittels einer der zwei Antennen einer Synchronisationsinformation, die in Form einer Mehrzahl von aufeinanderfolgenden Impulsen kodiert ist und wenigstens einmal pro Zyklus ausgesandt wird, gewährleistet, wobei die Dauer und/oder der Abstand der Impulse diese von den anderen von den Stationen ausgesandten Informationen unterscheidet.

10. Vorrichtung zum Ausführen des Verfahrens gemäß einem der Ansprüche 1 bis 8, beim Empfang, in einer Nebenstation, die Steuermittel (5) enthält, die die Sendefolge der Station gewährleisten; wobei die Vorrichtung dadurch gekennzeichnet ist, daß sie außerdem:
   - eine Antenne (60) zum Empfang der Synchronisationsinformation;
   - Mittel zum Empfang und zum Erfassen (61, 62, 63) der Synchronisationsinformation;
   - Dekodierungsmittel (64) für das von den vorangehenden Mitteln ausgesandte Signal, die so angeordnet sind, daß sie im Falle eines Wiedererkennens der Synchronisationsinformation an die Steuermittel (5) der Station ein Signal liefern, das den Synchronisations-Bezugszeitpunkt des Synchronisationssignals angibt, enthält.

11. Vorrichtung gemäß Anspruch 10, dadurch gekennzeichnet, daß die Empfangs- und Erfassungsmittel ein Filter (61) und eine Erfassungs- und Formgebungsschaltung (63) die gefilterte Information enthalten.

12. Vorrichtung gemäß einem der Ansprüche 10 oder 11, dadurch gekennzeichnet, daß die Dekodierungsmittel (64) ein Schieberegister (70) enthalten, das über dazwischengeschaltete Invertierer (73), die entsprechend dem Aufbau der zu dekodierenden Synchronisationsimpulse an bestimmten Ausgängen unterschiedlicher Positionen des Registers angeordnet sind, mit einem Steuertor ET verbunden ist.

13. Vorrichtung gemäß einem der Ansprüche 10 bis 12, dadurch gekennzeichnet, daß sie außerdem Mittel enthält, die die Erzeugung des Synchronisationssignals bei nicht gegebenem Empfang der von der Leitstation ausgesandten Synchronisationsinformation gewährleisten, wobei diese Mittel zwischen den Dekodierungsmitteln (64) und den Steuermitteln (5) der Station angeordnet sind und ein Taktgebersystem (80, 81) enthalten, das der Frequenz der Synchronisationsinformation nachgeregelt wird, wenn diese vorhanden ist, und an die Steuermittel (5) der Station das Synchronisationssignal liefert.

FIG_1

FIG_4

FIG_5

# FIG_2

| SEQ 1 | SEQ 2 | | SEQ 1 | | SEQ 2 | SEQ 1 | | SEQ 2 | | SEQ 1 | SEQ 2 | | | SEQ 1 | | SEQ 2 | | | | | | |

2 MOTS   3 MOTS   AUCUN MOT   3 MOTS   1 MOT   AUCUN MOT   3 MOTS

⟵————————— CYCLE < 615 ms —————————⟶⟵————————— CYCLE —————————⟶   ...

# FIG_3-a

| SITE | AZIMUT | DONNEES | AZIMUT | SITE | AZIMUT | SITE | → t |

0      10      20      30      40      50      60   64,9 ms

# FIG_3-b

DONNEES

| SITE | AZIMUT | | AZIMUT ARRIERE | AZIMUT | SITE | AZIMUT | SITE | → t |

0      10      20      30      40      50      60   67,5 ms

# FIG_6-a

t (μs)

0      50      100      150

# FIG_6-b

t (μs)

0      50      100      150

EP 0 188 937 B1

# FIG_7

EMETTEUR DE PUISSANCE 14

CIRCUIT DE COMMANDE ARRET-MARCHE 13

MODULATEUR DE PHASE 12

GENERATEUR DE FREQUENCE 11

COMMUTATEUR 2

ANTENNE SECTORIELLE

$V_1$ 3

$V_2$

DIVISEUR DE PUISSANCE 1 : N 41

N DEPHASEURS 42

N ELEMENTS RAYONNANTS 43

DISPOSITIF DE COMMANDE 5

51

52

LOGIQUE DE BALAYAGE 44

MEMOIRE 50

MEMOIRE 45

1

4

EP 0 188 937 B1

## FIG_8

FILTRE — 61 — 62 ▷ — DETECTION.MISE EN FORME (63) — DECODEUR (64) → (5)

60 (antenne)

## FIG_9

64

72 — HORLOGE

70

(63) → | 1 | 1 | 0 | 0 | 0 | 1 | 1 | 0 | 0 | 0 | 0 | 0 | 0 | 1 | 1 | ←

73

71 — PORTE ET

↓

(5)

EP 0 188 937 B1

# FIG_10